# EUROPÄISCHE PATENTSCHRIFT

(11) **EP 2 832 241 B1**
(45) Veröffentlichungstag und Bekanntmachung des Hinweises auf die Patenterteilung: **06.05.2020**
(21) Anmeldenummer: 14179208.5
(22) Anmeldetag: 30.07.2014
(51) Int. Cl.: A23L 3/36, A21D 15/02, B01D 5/00, F28B 3/06, F25D 31/00

(54) **VORRICHTUNG UND VERFAHREN ZUR KONDENSATION EINES DAMPFES IN EINER VAKUUMKAMMER**
DEVICE AND METHOD FOR CONDENSING STEAM IN A VACUUM CHAMBER
DISPOSITIF ET PROCÉDÉ DE CONDENSATION DE VAPEUR DANS UNE CHAMBRE À VIDE

(30) Priorität: 01.08.2013 EP 13178986
(43) Veröffentlichungstag der Anmeldung: 04.02.2015
(73) Patentinhaber: Glavatec AG, 8753 Mollis (CH)
(72) Erfinder: Giger, Ulrich, 8608 Bubikon (CH); Bäbler, Florian, 8753 Mollis (CH); Bäbler, Kaspar, 8753 Mollis (CH)
(74) Vertreter: Herrmann, Johanna

(56) Entgegenhaltungen:
- EP-A1- 0 686 400
- WO-A1-97/32113
- DE-B- 1 017 593
- JP-A- H11 211 314
- JP-A- 2000 193 369
- JP-A- 2001 221 546
- JP-A- 2007 192 459
- JP-A- 2010 133 569
- US-A- 996 991
- US-A- 2 696 775
- US-A- 5 235 903
- US-A- 5 946 919

## Beschreibung

Die Erfindung betrifft eine Vakuumkühlvorrichtung für Lebensmittel, insbesondere Backwaren, welche zur Kondensation eines Dampfes, insbesondere von Wasserdampf, geeignet ist. Eine Vakuumkühlanlage zum Kühlen von Lebensmitteln, insbesondere Backwaren, beispielsweise frisch gebackenem Brot unter einem negativen Druck umfasst eine Vakuumkammer, die zur Aufnahme des frischen Lebensmittels für dessen Kühlung ausgebildet ist; eine Vakuumquelle, wie beispielsweise eine Vakuumpumpe, die mit der Vakuumkammer zum Ausstoßen von Dampf aus der Vakuumkammer und zur Erzeugung eines Unterdrucks in der Vakuumkammer verbunden ist sowie einen Dampfkondensator.

Es sind Vorrichtungen zur Kondensation von Lösemitteldämpfen aus Vakuumdestillierapparaten oder Vakuumverdampfern aus der DE 1017 593 B bekannt. Eine derartige Vorrichtung enthält eine in einem Wasserbehälter angeordnete Rohrschlange oder Rohrbündel, in welchem die zu kondensierenden Dämpfe zirkulieren. Die Rohrschlange wird in ein Aufnahmegefäss geführt, welches zur Aufnahme des Kondensats dient. Wenn die Dämpfe in der Rohrschlange nicht vollständig durch das Wasserbad kondensiert werden, können die sich im Aufnahmegefäss sammelnden Dämpfe in einem Hilfskondensator kondensiert werden. Dieser Hilfskondensator ist in ebenfalls in dem Wasserbehälter innerhalb eines Verdrängungskörpers angeordnet. Der Hilfskondensator kann ein Absorptionsmittel enthalten, durch welches die Feuchtigkeit absorbiert wird. Da es sich um Lösemitteldämpfe handelt, die mit dieser Vorrichtung kondensiert werden sollen, ist es zwingend erforderlich, dass das Kühlmittel und die zu kondensierenden Lösemitteldämpfe miteinander nicht in Kontakt kommen. Diese Notwendigkeit besteht bei Lebensmitteln nicht, daher ist diese Vorrichtung für die Vakuumkühlung von Lebensmitteln nicht geeignet.

Für Dampfmotoren ist ein Kondensator für Hochdruckdampf aus WO97/32113 bekannt, welcher aus einem Druckbehälter besteht, in welchen über eine Dampfversorgungsleitung Dampf eingeleitet wird. Der Dampf wird über einen Verteiler direkt in ein Wasserbad eingeleitet. Der Verteiler weist eine Mehrzahl von Verteilerrohren auf, die in das Wasserbad hineinragen. Die Verteilerrohre sind über eine Mehrzahl von kleinen Öffnungen in direktem Kontakt mit dem Wasserbad, sodass Dampf in Form von Blasen durch die Öffnungen ins Wasserbad eingeleitet wird, wo seine Kondensation erfolgt.

Heisse und feuchte Lebensmittel können durch Evakuieren in einer Vakuumkammer sehr effizient abgekühlt werden, das heisst es ist nur eine kurze Abkühlungsdauer erforderlich. Allerdings fallen während des Evakuiervorgangs sehr grosse Volumina an Dampf an, welche ein Vielfaches des Kammervolumens betragen können. In einer Vakuumkammer, welche zwischen 4 und 6.6 m³ Kammervolumen aufweist, kann das Dampfvolumen beispielsweise bis 100 mal des Kammervolumens betragen.

Die Leistung der Vakuumpumpe wird durch das anfallende Dampfvolumen bestimmt. Das heisst die Vakuumpumpe muss derart ausgelegt werden, dass die gesamte Dampfmenge die Vakuumkammer über die Vakuumpumpe verlässt. Ein Beispiel für eine Vakuumpumpe 1 für eine Vakuumkühlkammer 2 ist in der JP11-211314 gezeigt. Die Vakuumpumpe 1 ist nach dem Prinzip einer Venturipumpe ausgelegt, welche die Luft aus der Vakuumkühlkammer mittels des Wasserdrucks des durch die Venturidüse der Venturipumpe strömenden Wassers absaugt. Nach diesem in der JP11-211314 gezeigten Prinzip wird also die Luft aus der Vakuumkühlkammer in einem Wasserstrom aufgenommen und abtransportiert. Bei diesem Verfahren erfolgt keine Dampfkondensation. Die Leistung der Wasserzirkulationspumpe 8, welche zum Betrieb der Venturipumpe 1 benötigt wird, muss für den gesamten, Dampf enthaltenden Luftstrom ausgelegt werden muss, daher entsprechend gross dimensioniert sein. Um die Dampfmenge, welche die Vakuumpumpe verarbeiten muss, zu vermindern, werden in die Vakuumleitungen Dampfkondensatoren eingebaut. Ein Beispiel für eine derartige Lösung ist in der US 2 696 775 gezeigt. US 2 696 775 zeigt eine Vakuumkammer zur Kühlung von Lebensmitteln, die mit einem Backofen kombiniert ist. Nach Abschluss des Backvorgangs wird das Backgut evakuiert. Hierzu wird der Dampf über eine Leitung abgesaugt, in einen Kondensator eingeleitet und dann der Vakuumpumpe zugeführt. Der Kondensator ist zwischen Vakuumkammer und Vakuumpumpe angeordnet und nicht am Boden der Vakuumkammer, sodass der Dampf nicht mit dem Wasserbad in Berührung kommt. Ein weiteres Beispiel für einen einer Venturipumpe vorgeschalteten Wärmetauscher, in welchem eine Dampfkondensation erfolgt, ist in der JP2001-221546 gezeigt. Diese Dampfkondensatoren verhindern zwar, dass ein Teil des Dampfes die nachgeschaltete Vakuumpumpe erreicht, allerdings muss die Vakuumpumpe den gesamten nicht kondensierten Dampfvolumenstrom aus dem Vakuumbehälter umwälzen.

Die DE 2902270 bezieht sich auf ein Verfahren zum Abkühlen von Backgut mittels Druckerniedrigung in einer Kühlkammer. Hierbei wird Dampf aus der Kühlkammer mittels einer Vakuumpumpe abgesaugt. Die Regelung der Kühlung erfolgt derart, dass der Druck bis zu einem vorgegebenen Sollwert erniedrigt wird und dann in einer zweiten Druckerniedrigungsphase bis zum nächst niedrigeren Sollwert abgesaugt wird, wenn der gemessene Druck während eines vorgegebenen Zeitintervalls **Δ**t den Sollwert um nicht mehr als einen vorgegebenen Wert **Δ**p übersteigt. Ofenheisses Backgut kann mit diesem Verfahren innerhalb weniger Minuten auf Umgebungstemperatur abgekühlt werden, sodass es schnittfest ist und beim Verpacken in Kunststoffbeuteln kein Kondensat mehr bildet.

Die in der DE 2902270 vorgeschlagene Lösung bewirkt keine Änderung in dem Leistungsbedarf der Vakuumpumpe, sie erlaubt allein eine präzisere Regelung des Vakuumkühlvorgangs. Eine präzisere Regelung des Vakuumkühlvorgangs kann eine Verkürzung der Betriebsdauer zur Folge haben. Hierdurch kann der Gesamtenergiebedarf der Vakuumkühlvorrichtung pro Charge zwar vermindert werden, was sich allerdings nicht oder nur geringfügig auf die benötigte Leistung der Vakuumpumpe auswirkt.

Die DE 2 301 807 betrifft ein Verfahren zum Kühlen und/oder Trocknen von feuchten Nahrungsmitteln unter Vakuum, wobei zur Regelung die Temperatur des Nahrungsmittels oder der Atmosphäre, der Druck, die Feuchtigkeitsmenge in der Atmosphäre oder im Nahrungsmittel nach der Kühlung, der Sättigungsgrad der Atmosphäre sowie die Zeit berücksichtigt wird. Auch dieses Dokument betrifft eine Verbesserung der Regelung der Vakuumkühlvorrichtung, welches eine Vielzahl von Parametern berücksichtigt.

In der US2 072 737 ist ein Verfahren zum Kühlen von Backwaren beschrieben, bei welchem die Kruste des Brots weich und feucht gehalten werden soll. Das heisse, gebackene Brot wird während einer ersten Periode abgekühlt, sodass die Kruste teilweise gekühlt wird. Dann wird das Brot weiter abgekühlt, indem es in eine Vakuumumgebung eingebracht wird, wobei das Vakuum derart eingestellt wird, dass es oberhalb des Dampfdrucks des Wassers bei (Brot)krustentemperatur gehalten wird.

DE 10 2008 035 068 A1 betrifft ein Verfahren zur Herstellung von Backwaren oder Frittierprodukten, bei welchem während der gesamten Teigverarbeitung und Teigbearbeitung eine hohe relative Luftfeuchtigkeit eingehalten und die fertig gebacken heisse Backware einem Vakuumkühlverfahren unterzogen wird. Die relative Luftfeuchtigkeit soll grösser oder gleich 96% betragen.

AT400279B beschreibt ein Verfahren zur Erzeugung und Konservierung von vorgebackenen Backwaren. Die Teiglinge werden teilweise fertig gebacken und dann schockartig auf unter 0°C abgekühlt. Die Teiglinge enthalten 5-15% mehr Wasser bezogen auf die Mehlmenge sowie wasserbindende Zugabemittel. Daher kann die Backzeit um 15-45% verkürzt werden und die Backtemperatur um 5 bis 25% erhöht werden. Im heissen Zustand werden die Backwaren mit Unterdruck beaufschlagt. Die JP2010-133569 A zeigt eine Schockgefrierkühlanlage und Vakuumkühlung.
Die WO2012082060 beschreibt eine Vakuumkühlanlage für Backgut, die mit Niederdruckdampf befeuchtet wird. Die Vorrichtung umfasst einen Dampferzeuger zur Erzeugung von Dampf unter einem Unterdruck. Der Dampf ist im Wesentlichen frei von Luft, wobei der Dampferzeuger in Verbindung mit der Vakuumkammer angeordnet ist, so dass der erzeugte Dampf in die Kammer ohne gleichzeitige Luftzufuhr eingeführt wird.

Im Stand der Technik wird daher der gesamte Wasserdampf mit der Vakuumpumpe in die Umgebung geleitet. Dementsprechend erhöht sich der Durchsatz durch die Vakuumpumpe um bis zu dem hundertfachen Wert des Luftdurchsatzes. Ein Teil des Wasserdampfs kann gezielt dafür genutzt werden, den Feuchtigkeitsgehalt der Backwaren zu erhöhen. Diese Lösung ist mit einem hohen Energieverbrauch verbunden. Dementsprechend muss eine Vakuumpumpe mit hoher Leistung eingesetzt werden. Die Pumpenleistung beträgt üblicherweise um die 45 kW.
Die Verwendung einer derart leistungsstarken Vakuumpumpe hat neben dem hohen Energieverbrauch eine ganze Reihe von Nachteilen im Betrieb.

Zumeist werden ölgeschmierte Vakuumpumpen vorgesehen, um das Dampfvolumen abzupumpen, weil sie einen hohen elektrischen Anschlusswert aufweisen. Während des Betriebs der Vakuumpumpe kommt der abzusaugende Dampf mit dem Schmieröl der Vakuumpumpe in Kontakt. Wenn der Dampf kondensiert, bevor er in die Vakuumpumpe gelangt oder im Innenraum der Vakuumpumpe kondensiert, kommt es zur Bildung eines Wasser-Öl-Gemisches, das eine stabile Emulsion ausbildet. Das Schmieröl muss deutlich über den Siedepunkt von Wasser erhitzt werden, um eine Emulsionsbildung zu verhindern. Das Schmieröl hat einen Siedepunkt von über 100°C. Der Siedepunkt des Wassers liegt darunter. Die Vakuumpumpe sollte daher über dem Siedepunkt des Wassers betrieben werden. Hierzu sollte die gesamte Vakuumpumpe, die mit dem Dampf in Berührung kommt, eine Temperatur aufweisen, die über dem Siedepunkt des Wassers liegt, das heisst das Wasser verdampft unter atmosphärischen Bedingungen. Hierzu ist es erforderlich, dass die Vakuumpumpe läuft, auch wenn sie gerade nicht für die Vakuumbildung benötigt wird, damit die notwendige Wärme erzeugt wird. Eine Ölemulsion kann entstehen, solange sich Dampf in der Vakuumkammer befindet, auch wenn die Vakuumkammer nicht mehr zur Durchführung einer Vakuumkühlung verwendet wird. Daher sollte die Vakuumpumpe mindestens eine Stunde lang weiter laufen, nachdem der letzte Vakuumkühlvorgang abgeschlossen ist. Die Vakuumpumpe sollte auch mindestens eine Stunde vorzugsweise mindestens 90 Minuten, besonders bevorzugt mindestens zwei Stunden früher in Betrieb genommen werden, damit sie die notwendige Betriebstemperatur erreicht.

Der Vakuumpumpe kann ein Abscheider nachgeschaltet sein, um den Wasserdampf zu kondensieren. Wenn in der Vakuumpumpe bereits Wasserdampf kondensiert, nimmt dieser Wasserdampf Schmieröl auf. Daher befinden sich im Wasserdampfkondensat klebrige Schmierölrückstände, die in den Wasserablauf gelangen können. Da die Ölemulsion, die durch den kondensierenden Wasserdampf in der Vakuumpumpe gebildet wird, stabil ist, kann sie unter Umständen nicht durch einen konventionellen Ölfilter abgeschieden werden. Die zum Einsatz kommenden Abscheider sind voluminös, aufwändig zu entwässern und zu reinigen.

Die Verwendung einer leistungsstarken Vakuumpumpe kann auch dazu führen, dass Verunreinigungen, wie Schmutzpartikel, Lebensmittelfette und andere Backrückstände aus der Vakuumkammer abgesaugt werden. Filter können in der Vakuumleitung zwischen der Vakuumkammer und der Vakuumpumpe eingebaut sein, um zu verhindern, dass diese Verunreinigungen in die Vakuumpumpe gelangen können. Jeder Filter in der Vakuumleitung erhöht allerdings den Druckverlust, was in Bereichen von 200 bis 300 mbar noch einen vernachlässigbaren Effekt darstellt, allerdings bei Drücken von unter 20 mbar, insbesondere unter 5 mbar und darunter eine deutliche Erhöhung der Pumpenleistung erfordert, damit eine Evakuierung im unteren Vakuumbereich erfolgen kann.

Das Kondensat des aus der Vakuumkammer abgesaugten Dampfes ist sehr sauer und Maschinenteile der Vakuumpumpe aus Stahl können korrodieren, wenn sie in Kontakt mit dem Kondensat kommen. Es ist zwar möglich, Vakuumpumpenteile sowie Filter oder Abscheider aus rostfreiem Stahl einzusetzen. Allerdings hat sich gezeigt, dass es an Stellen, wo sich Kondensat in einer Totzone ansammelt, auch Edelstahlelemente korrodieren können. Um die Öltemperatur ständig über dem Siedepunkt des Wassers halten zu können, muss die Vakuumpumpe zwangsläufig immer eingeschaltet sein. Dies führt zu einem zusätzlichen Energieverbrauch, denn die Vakuumpumpe bleibt eingeschaltet, selbst wenn sie für das Vakuumkühlverfahren nicht benötigt wird.

Der Verlauf des Kühlverfahrens kann die Qualität des vakuumgekühlten Lebensmittels beeinflussen. Der Verlauf des Kühlverfahrens wird insbesondere eine Regelung des Drucks in der Vakuumkammer sowie gegebenenfalls eine Regelung der Temperatur festgelegt und überwacht. Im Stand der Technik erfolgt die Druckregelung gemäss einer Regelungsvorschrift, die den Verlauf des Drucks über der Zeit abbildet, das heisst einer Druckkurve. Die Druckkurve wird durch die Rezeptur der jeweiligen Lebensmittel bestimmt. Bisher musste der Druck über ein Ventil zweipunktgeregelt werden. Das Ventil weist im Wesentlichen zwei Betriebszustände auf, den geschlossenen Zustand, in welchem die Verbindung zur Vakuumpumpe unterbrochen ist und den offenen Zustand, in welchem die Verbindung zu Vakuumpumpe besteht und Dampf aus der Vakuumkammer abgesaugt werden kann. Das heisst einer der Punkte der Zweipunktregelung entspricht dem geschlossenen Ventil, ein zweiter der Punkte der Zweipunktregelung entspricht dem geöffneten Ventil. Wenn das Ventil öffnet, erfolgt die Reduktion des Drucks schlagartig. Diese schlagartige Druckverringerung kann dazu führen, dass Feuchtigkeit aus dem Lebensmittel austritt und in den Dampfkreislauf gelangt. Daher können viele Lebensmittel mit dieser Zweipunktregelung nicht optimal gekühlt werden. Eine Qualitätseinbusse der Lebensmittel muss dadurch in Kauf genommen werden. Die Vakuumpumpe muss zudem für diese einfache Zweipunktregelung kontinuierlich ohne Unterbrechung laufen.

Der vorliegenden Erfindung liegt die Aufgabe zugrunde, einen Dampfkondensator sowie eine Vakuumkühlvorrichtung mit einem Dampfkondensator zu entwickeln, mittels welchem ein grosser Teil des in der Vakuumkammer entstehenden Dampfs kondensiert werden kann, ohne dass es zu einer Kontamination der Vakuumpumpe kommt. Es ist eine weitere Aufgabe der Erfindung, den Leistungsbedarf der Vakuumpumpe zu verringern.

Die Aufgabe wird durch eine Vakuumkühlvorrichtung nach Anspruch 1 gelöst. Weitere vorteilhafte Ausführungsbeispiele sind Gegenstand der Unteransprüche 2 bis 7. Ein Verfahren zur Lösung der Aufgabe der Erfindung ist Gegenstand der Ansprüche 8 bis 13.

Eine Vakuumkühlvorrichtung zur Kühlung von Lebensmitteln, insbesondere heissen Backwaren umfasst eine Vakuumkammer, die eine Produktkammer zur Aufnahme des Lebensmittels für dessen Kühlung und eine Abscheidekammer enthält. Des Weiteren enthält die Vakuumkühlvorrichtung eine Vakuumquelle, wie beispielsweise eine Vakuumpumpe, die mit der Abscheidekammer verbunden ist, und einen Dampfkondensator zur Kondensation von in der Produktkammer während des Abkühlvorgangs entstehendem Dampf. Der Dampfkondensator enthält ein Kühlmittel in einer Wanne und umfasst ein Dampfeinleitungselement zur Einleitung des Dampfes in das Kühlmittel. Der Dampfkondensator ist unmittelbar unter der Produktkammer angeordnet, um den Dampf aus der Produktkammer aufzunehmen. Es ist auch möglich, dass der Dampfkondensator zwar mit der Produktkammer in fluidleitender Verbindung steht, aber baulich von der Produktkammer getrennt ist, ja sogar als separates Modul ausgeführt sein kann.

Nach einem Ausführungsbeispiel ist das Dampfeinleitungselement unterhalb eines Kammerbodens angeordnet. Der Kammerboden dient der Aufnahme der Gebinde für die Lebensmittel, insbesondere Gestelle, Regale, Stikkenwagen oder dergleichen. Das Dampfeinleitungselement umfasst eine Mehrzahl von Kanälen oder Rohrelementen, welche teilweise in das Kühlmittel hineinragen. Das heisst, das Kühlmittel umgibt die Kanäle oder Rohrelemente zumindest teilweise. Insbesondere kann der Dampfkondensator als Bestandteil der Vakuumkammer ausgebildet sein. Insbesondere ist der Dampfkondensator als eine Filterstrecke für das Rückhalten von Verunreinigungen im Dampf ausgebildet.

Nach einem Ausführungsbeispiel kann eine Regelungseinheit für die Kondenswassermenge und/oder die Kondenswassertemperatur vorgesehen sein. Hierdurch kann sichergestellt werden, dass die Kanäle oder Rohrelemente immer in das Kühlmittel eintauchen. Das heisst, der Dampf, der von oben in die Kanäle oder Rohrelemente eintritt, muss auf dem Weg zur Vakuumpumpe durch das Kühlmittel hindurch treten, wobei der Dampf im Kühlmittel kondensiert. Ebenso kondensieren allfällige mit dem Dampf mitgeführte Verunreinigungen. Das restliche Gas, also die dampfarme Luft, tritt in die Abscheidekammer ein. In der Abscheidekammer kann ein Abscheideelement angeordnet sein. Wenn die dampfarme Luft das Kühlmittel verlässt, bildet sich eine Spritzschicht aus. Das Abscheideelement dient zum Auffangen der Tropfen aus der Spritzschicht und verhindert somit, dass Flüssigkeit in die Vakuumleitung eingesaugt wird und zur Vakuumquelle gelangt. Die Vakuumquelle umfasst eine Vakuumpumpe, wobei die Vakuumpumpe insbesondere eine drehzahlgeregelte Vakuumpumpe ist. Durch die Anpassung der Drehzahl kann der Druckverlauf genau geregelt werden. Somit können beliebige Druckverläufe der Druckverlauf genau geregelt werden. Somit können beliebige Druckverläufe realisiert werden, indem die Drehzahl der Vakuumpumpe entsprechend angepasst wird.

Nach einem Ausführungsbeispiel enthält die Wanne einen Wärmetauscher, sodass die Kondensationswärmeenergie in einer Wärmerückgewinnungsanlage wieder verwendbar ist. Die im Dampfkondensator entstehende Wärme kann somit für andere Prozessschritte genutzt werden. Zwar ist die Rückgewinnung von Wärme aus einer Anwendung für Dampfsterilisatoren aus der EP0 686 400 A1 bekannt, allerdings ist die Wärmerückgewinnung als ein einer Ejektorpumpe nachgeschalteter Wärmetauscher ausgeführt. In diesem Wärmetauscher wird die Wärme des von der Ejektorpumpe abgesaugten Gemisches aus Treibdampf und dem aus der Sterilisationskammer abgesaugten Dampf an einen Wärmeträger abgegeben und anderorts genutzt. In diesem Fall handelt es sich somit nicht um Wärme, die von einem Dampfkondensator abgegeben worden ist.

Ein Verfahren zur Vakuumkühlung eines Lebensmittels umfasst die Schritte: Befüllen einer Produktkammer einer Vakuumkühlvorrichtung mit dem Lebensmittel, Schliessen der Produktkammer, Betätigen einer Vakuumquelle zur Erzeugung eines negativen Drucks, Entnahme des gekühlten Lebensmittels. In der Produktkammer wird durch das Abkühlen des Lebensmittels entweichende Dampf in einem Dampfkondensator kondensiert.

Erfindungsgemäß enthält der Dampfkondensator ein Kühlmittel in einer Wanne, sodass der Dampf in ein Dampfeinleitungselement geführt wird und in das Kühlmittel eingeleitet wird. Hierbei wird das Kühlmittel mit Dampf beladen und der Dampf enthält einen Wasseranteil, welcher im Kühlmittel kondensiert. Das Kühlmittel kann insbesondere Wasser sein.

Das Kühlmittel kann periodisch oder aufgrund des Erreichens eines vorgegebenen Grenzwertes ausgetauscht werden, insbesondere wenn dessen Temperatur zu hoch wird, die Konzentration an Verunreinigungen einen Maximalwert erreicht oder der pH-Wert auf 4 oder weniger gesunken ist. Somit können die Verunreinigungen im Dampfkondensator gesammelt werden und mit dem Kühlmittel entsorgt werden oder einer nachgeschalteten Entsorgungsanlage zugeführt werden.

Nach einem Ausführungsbeispiel kann die Kühlung des Kühlmittels mittels eines Wärmetauschers erfolgen, der beispielsweise mit Frischwasser gespeist wird. Nach einem Ausführungsbeispiel kondensieren zumindest 60%, bevorzugt zumindest 90% des Wasseranteils im Dampf im Dampfkondensator. Insbesondere können im Dampf befindliche Verunreinigungen im Kondensat angereichert werden und mit dem Kondensat ausgetragen werden. Diese Variante ermöglicht insbesondere eine einfache Reinigung.

Ein Dampfkondensator für eine Vakuumkühlvorrichtung nach einem der vorhergehenden Ausführungsbeispiele enthält eine Wanne, die im Betriebszustand ein Kühlmittel enthält und umfasst ein Dampfeinleitungselement zur Einleitung des Dampfes in das Kühlmittel, sodass der Dampf und das Kühlmittel in direktem Kontakt stehen.

Der Dampfkondensator enthält somit eine Wanne, die einen Dampfraum und einen Ansaugraum aufweist, wobei der Dampfraum durch einen Kammerboden begrenzt ist. Der Kammerboden enthält mindestens eine Öffnung. Durch diese Öffnung kann im Betriebszustand Dampf in den Dampfraum eintreten. Der Betriebsdruck in der Wanne ist kleiner als der Umgebungsdruck. Die Wanne enthält im Betriebszustand ein Kühlmittel. Der Dampfkondensator enthält ein Dampfeinleitungselement zur Einleitung des Dampfes in das Kühlmittel. Das Dampfeinleitungselement ist in der Wanne unterhalb des Kammerbodens angeordnet. Das Dampfeinleitungselement kann ein Kanalelement, welches eine Mehrzahl von Kanälen enthält, Rohrelemente, ein Plattenelement oder einen Kanalboden umfassen. Das Dampfeinleitungselement kann teilweise in das in der Wanne befindliche Kühlmittel hineinragen oder oberhalb des Flüssigkeitsspiegels des Kühlmittels angeordnet sein, wobei ein Kühlmittelstrom entlang des Dampfeinleitungselements fliessen kann. Das Dampfeinleitungselement kann zumindest eine Öffnung enthalten, sodass der Flüssigkeitsspiegel des Kühlmittels im Dampfeinleitungselement dem Flüssigkeitsspiegel des Kühlmittels in der Wanne entspricht. Die Wanne weist ein Trennelement auf, welches den Dampfraum von einem Ansaugraum trennt, wobei der Ansaugraum an eine Vakuumerzeugungseinrichtung anschliessbar ist, sodass der Dampf vom Dampfraum mittels des Dampfeinleitungselements in dem Kühlmittel aufnehmbar ist, wenn durch die Vakuumerzeugungseinrichtung im Ansaugraum ein Unterdruck erzeugbar ist. Der Wasseranteil des Dampfes kondensiert im Kühlmittel zu einem grossen Teil. Ein dampfarmer Luftstrom verlässt die Wanne in Richtung Ansaugraum. Vorteilhafterweise ist der Flüssigkeitsspiegel des Kühlmittels derart, dass das Trennelement in das Kühlmittel ragt. Hierdurch wird der Dampf gezwungen, einen Weg durch das Kühlmittel vom Dampfraum in den Ansaugraum zu nehmen. Das Trennelement kann als eine Wand der Abscheidekammer ausgebildet sein.

Das Dampfeinleitungselement ist bevorzugt unterhalb eines Kammerbodens angeordnet, der zur Aufnahme der Lebensmittel dient. Insbesondere umfasst das Dampfeinleitungselement eine Mehrzahl von Kanälen oder Rohrelementen, welche teilweise in das Kühlmittel hineinragen. Der Dampf kann Verunreinigungen enthalten, die vom Kühlmittel aufnehmbar sind, sodass das Kühlmittel als eine Filterstrecke für das Rückhalten der Verunreinigungen ausgebildet ist.

Auf eine Zufuhr von Feuchtigkeit, das heisst zusätzlichem Wasser oder Wasserdampf beispielsweise in der Form von Sprühnebeln in die Vakuumkammer kann verzichtet werden. Eine Erhöhung des Wassergehalts der Backwaren kann vorgesehen werden, wenn die Backwaren eine besonders feuchte Oberfläche aufweisen müssen. Der Wassergehalt ist in den Backwaren erwünscht, weil der Backvorgang hierdurch schneller abgeschlossen werden kann. Allerdings kann eine zu starke Druckdifferenz, insbesondere eine schlagartige Druckabsenkung wie sie mit einer Zweipunktregelung auftreten kann, dazu führen, dass die Feuchtigkeit aus dem Inneren der Lebensmittel an deren Oberfläche gelangt und von dort in die Vakuumkammer und mit dem Dampfkreislauf zu dem Dampfkondensator.

Der Dampfkondensator ist gemäss einem Ausführungsbeispiel ein Bestandteil der Vakuumkammer. Der Dampfkondensator enthält gemäss diesem Ausführungsbeispiel ein Wasserbad am Boden der Vakuumkammer. Gleichzeitig dient der Dampfkondensator als Schmutzfilter, da mit dem Dampf mitgeführte Schmutzpartikel im Wasserbad kondensieren und mit dem Kondensat ausgetragen werden können. Derartige Schmutzfilter sind beispielsweise auf dem Gebiet des Staubsaugens bekannt. Die US 996 991 zeigt einen Staubsauger, in welchem die angesaugte Luft zuerst über einen Staubsaugersack geführt wird und nach Durchlaufen des Staubsaugersacks durch ein Wasserbad geleitet wird. Diese Vorrichtung der US 996 991 ist nicht für einen Dampf geeignet, das heisst einen Luftstrom, welcher Wasserdampf enthält, da der Staubsaugersack durch den Dampf feucht würde und daher die Schmutzpartikel an der Wand des Staubsaugersacks kleben würden. Die Poren des Staubsaugersacks würden hierdurch sehr schnell verstopft, wodurch der Druckverlust stark ansteigt, was eine sehr leistungsfähige Vakuumpumpe erfordert. Gerade die Leistung der Vakuumpumpe soll aber in der vorliegenden Vakuumkühlvorrichtung vermindert werden, sodass sich die Lösung der US 996 991 nicht auf die vorliegende Vakuumkühlvorrichtung anwenden lässt.

Die Kondensationswärmeenergie kann genutzt werden, das heisst es kann eine Vorrichtung zur Wärmerückgewinnung vorgesehen sein. Diese Wärmerückgewinnung kann zur Erwärmung oder zum Vorwärmen des Prozesswassers verwendet werden. Während der Vakuumkühlung verdampft Wasser in den Lebensmitteln und deshalb werden diese abgekühlt. Der Verarbeitungsprozess für Backwaren läuft wie folgt ab: Die Backwaren werden bis zu 60 min gebacken, wobei es nach circa 2/3 der zur Verfügung stehenden Zeit ein Trocknungsvorgang an den Backvorgang anschliesst. Das heisst, gemäss diesem Beispiel würde der Backvorgang ca. 40 min und der Trocknungsvorgang ca. 20 min in Anspruch nehmen.

Das ganze Wasserdampfvolumen wird durch ein Wasserbad innerhalb der Vakuumkammer geleitet, dadurch kondensiert der Dampf und erwärmt das Wasser. Die anfallende Wärmeenergie kann mit einer Kältemaschine dem Wasserbad entzogen und kann z.B. für die Warmwasseraufbereitung oder für Heizzwecke, genutzt werden.

Die Temperatur des Wasserbades wird überwacht und garantiert einen reproduzierbaren Vakuumprozess. Das Wasserbad hat eine gute Filterwirkung, dadurch können Backrückstände nicht in die Vakuumpumpe gelangen.

Das anfallende Kondenswasser ist sauer und wird im Wasserbad verdünnt, da der Wasseranteil des Dampfs vom Kühlmittel aufgenommen wird. Da als Kühlmittel bevorzugt Wasser eingesetzt wird, erfolgt eine Verdünnung des sauren Kondenswassers in dem in der Wanne befindlichen Kühlmittel.
Das Kühlmittel wird über eine Kühlmittelablassleitung abgelassen. Durch sporadisches Abschlämmen des Kühlmittels werden im Kühlmittel, das heisst im Wasser gelöste Backrückstände abgeführt.

Da die Verunreinigungen, wie Backrückstände sich mit der Zeit im Kühlmittel und daher in der Wanne des Dampfkondensators ansammeln, kann es zu Beeinträchtigungen beim Betrieb des Dampfkondensators kommen. Daher erfolgt mit dem Nachfüllen des Wasserbades ein interner Reinigungsprozess der Vakuumkammer, das heisst der Abscheidekammer, der Produktkammer sowie des Dampfkondensators.

Eine direkte Bypassverbindungsleitung zwischen Vakuumkammer und Vakuumleitung kann vorgesehen sein, welche durch ein Bypassventil geöffnet oder geschlossen werden kann. Wenn das Bypassventil geöffnet ist, wird der Dampf nicht über den Kondensator geführt, sondern direkt in die Vakuumleitung eingeleitet. Diese Bypassverbindungsleitung kann am Ende des Vakuumkühlvorgangs eingesetzt werden, wenn der Dampf nur noch wenig Feuchtigkeit enthält. Da der Druckverlust durch den Kondensator entfällt, wenn der Dampf aus der Vakuumkammer direkt in die Vakuumleitung geführt wird, können niedrigere Drücke in der Vakuumkammer erreicht werden.

Die erfindungsgemässen Ausführungsbeispiele haben zumindest einige der nachgenannten Vorteile: Die Vakuumkammer und der Dampfkondensator insbesondere das Wasserbad, sind nach einem Ausführungsbeispiel eine Einheit, sodass ein zusätzlicher Druckbehälter entfällt, was Kostenvorteile bringt.
Das Kühlmittel dient gleichzeitig als Filterstrecke, um mit dem Dampf mitgerissene Verunreinigungen aus der Produktkammer im Kühlmittel durch Kondensation abzuscheiden.

Es können trocken laufende Vakuumpumpen eingesetzt werden, da die dampfarme Luft, die von der Abscheidekammer angesaugt wird, einen allenfalls niedrigen Wasserdampfgehalt sowie keine Verunreinigungen enthält.
Das saure Kondensat wird verdünnt, indem es im Dampfkondensator vom Kühlmittel Wasser aufgenommen wird. Hierdurch wird die Gefahr von Schäden durch Korrosion an den Bauteilen verringert, die mit dem Kondensat in Kontakt sind.
Die Kondensierungswärmeenergie kann im Produktionsprozess genutzt werden, beispielsweise als Vorwärmer.
Der Vakuumprozess ist reproduzierbar. Beispielsweise kann der Verlauf der Vakuumkühlung beispielsweise als Druckverlauf in Abhängigkeit von der Abkühlzeit in einer elektronischen Kontrolleinheit gespeichert werden und immer wieder abgerufen werden und erlaubt durch die genaue Regelung der Vakuumpumpe Chargen mit gleichen Produkteigenschaften zu erhalten.
Eine automatische Reinigung des Dampfkondensators sowie der Produktkammer und/oder der Abscheidekammer erfolgt durch Austausch des Wassers.
Die Vakuumpumpe wird energieeffizient eingesetzt, da sie nur während dem Vakuumprozess im Lastbetrieb eingeschaltet ist.

Mit einer drehzahlgeregelten Vakuumpumpe können alle Lebensmittel gekühlt werden, das heisst es kann ein beliebiger Verlauf der Vakuumkühlung realisiert werden, insbesondere kann eine zusätzliche Befeuchtung der Lebensmittel entfallen. Ist der Dampfkondensator als Teil der Vakuumkühlvorrichtung ausgebildet, entfällt ein zusätzlicher Druckbehälter für die Wasserabscheidung in der Vakuumleitung. Die Vakuumpumpe ist fast ausschliesslich während der Kühlperiode in Betrieb, da das Vakuum über die Drehzahl geregelt werden kann und die Abluft aus der Vakuumkammer im Wesentlichen frei von Dampf ist. Die Vakuumpupe muss nicht abgestellt werden, sie kann im Bereitschaftsbetrieb weiterlaufen. Im Bereitschaftsbetrieb verrichtet die Vakuumpumpe keine Arbeit.

Nachfolgend werden Ausführungsbeispiele der Erfindung anhand der Zeichnungen erläutert. Darin zeigen:
- Fig. 1: einen Schnitt durch eine Vakuumkühlvorrichtung nach einem ersten Ausführungsbeispiel,
- Fig. 2: eine Ansicht des Dampfkondensators gemäss Fig. 1,
- Fig. 3: ein Detail des Dampfkondensators,
- Fig. 4: ein Detail des Dampfkondensators nach einer Variante,
- Fig. 5: einen Schnitt durch eine Vakuumkühlvorrichtung mit Wärmerückgewinnung,
- Fig. 6: eine Ansicht eines Dampfkondensators nach einem zweiten Ausführungsbeispiel.
- Fig. 7: ein Detail des Dampfkondensators nach einer zweiten Variante
- Fig. 8: einen Schnitt durch eine Vakuumkühlvorrichtung nach einem dritten Ausführungsbeispiel

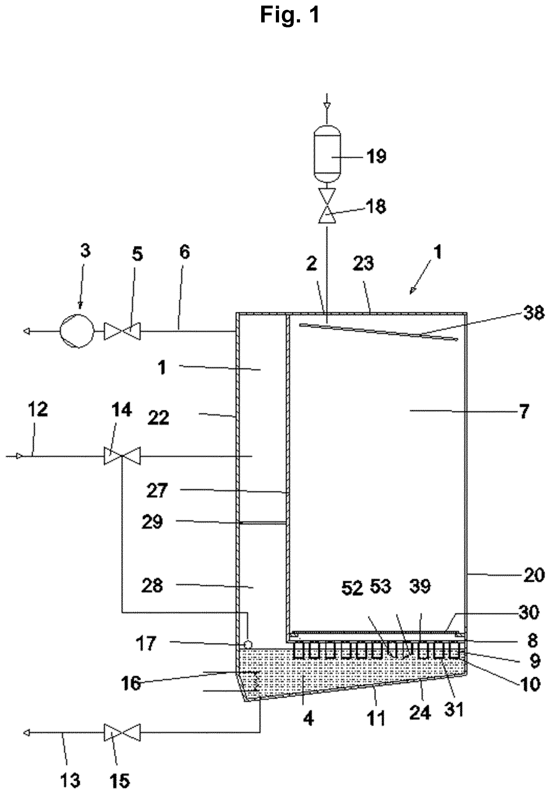

Die in Fig. 1 dargestellte Vakuumkühlvorrichtung 1 umfasst eine Vakuumkammer 2, eine Vakuumquelle 3 und einen Dampfkondensator 4. Die Vakuumquelle 3 ist eine Vakuumpumpe, die über eine Vakuumleitung 6 mit der Vakuumkammer 2 in fluidleitender Verbindung steht. In der Vakuumleitung 6 ist ein Ventil 5 angeordnet. Die Vakuumkammer 2 enthält eine Produktkammer 7, die im Betriebszustand die zu kühlenden Lebensmittel enthält. Des Weiteren enthält die Vakuumkühlvorrichtung 1 eine Abscheidekammer 28. Die Abscheidekammer 28 ist neben der Produktkammer 7 angeordnet und von dieser durch eine Zwischenwand 27 getrennt.

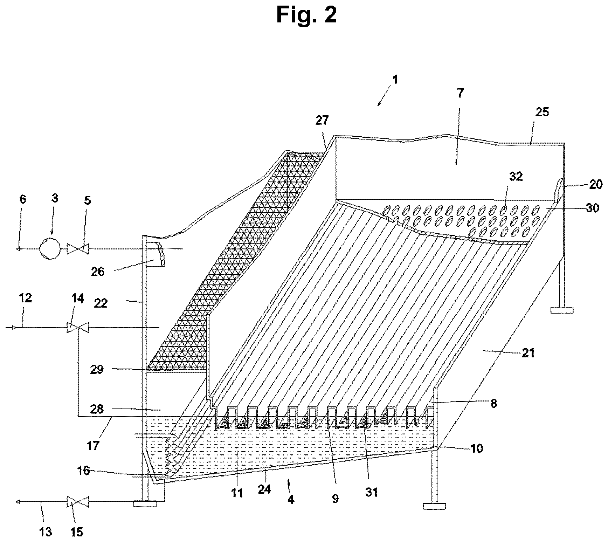

Die Vakuumkammer hat im Bereich der Wand 21 oder der Wand 26 oder der Wand 25 (siehe Fig. 2) eine nicht dargestellte Tür, welche geöffnet wird, um die Lebensmittel in der Produktkammer 7 zu platzieren und nach Abschluss der Vakuumkühlung wieder aus der Produktkammer 7 zu entnehmen. Die Produktkammer 7 kann mittels eines Belüftungsventils 18, welches oberhalb der Decke 23 angeordnet ist, belüftet werden. Das Belüftungsventil ist über eine Belüftungsleitung mit der Produktkammer 7 verbunden. In der Belüftungsleitung ist ein Filterelement 19 angeordnet, um Verunreinigungen aus der Frischluft herauszufiltern, welche die Qualität der Lebensmittel beeinträchtigen können. Das Belüftungsventil kann als variables Drosselelement ausgestaltet sein. Es kann während des Kühlvorgangs zumindest teilweise geöffnet sein. Während des Beladens und Entladens der Lebensmittel ist das Belüftungsventil in geöffnetem Zustand, damit für Personen, welche sich in der Produktkammer befinden, eine ausreichende Frischluftversorgung gewährleistet ist, selbst wenn die Tür der Vakuumkammer 2 geschlossen ist. Da zusammen mit der Frischluft Feuchtigkeit in die Produktkammer gelangt, wird die Frischluft innerhalb der Produktkammer über ein Ablenkelement 38 in Richtung zumindest einer der Wände 21, 25, 26, 27 abgelenkt. Die Wand 26 ist in Fig. 1 nicht sichtbar, da sie vor der Zeichnungsebene liegt und die Wand 25 bildet die hintere Begrenzung der Produktkammer 7 aus. Die beiden Wände 25, 26 sind in der Fig. 2 gezeigt. Während des Kühlvorgangs kondensieren Tröpfchen auf der Oberfläche des Ablenkelements 38 oder an einer der Wände 21, 25, 26, 27. Das Ablenkelement kann mit Ablaufrinnen ausgestattet sein oder es endet an seinem tiefsten Punkt an einer Stelle, von welcher das Kondensat direkt auf den Kammerboden tropfen kann. Mit diesen Massnahmen kann vermieden werden, dass das Kondensat in Kontakt mit den Lebensmitteln kommt.

Die Vakuumkammer 2 enthält den Dampfkondensator 4, der den Boden der Produktkammer 7 ausbildet. Der Dampfkondensator 4 ist von der Produktkammer 7 durch einen Zwischenboden 8 getrennt. Oberhalb des Zwischenbodens 8 ist ein Kammerboden 30 angeordnet. Auf dem Kammerboden 30 werden die Lebensmittel in ihren Gestellen abgestellt. Der Kammerboden 30 dient demnach als Auflage für einen Stikkenwagen, welcher die Gestelle trägt, welche die Auflageflächen für die Lebensmittel ausbilden. Unterhalb des Zwischenbodens 8 ist ein Kanalboden 10 vorgesehen, der mehrere Kanäle 9 enthält. Die Kanäle 9 ragen in eine mit Flüssigkeit gefüllte Wanne 11. Die Flüssigkeit ist ein Kühlmittel, welches über die Kühlmittelzufuhrleitung 12 in die Wanne 11 gelangt und die Wanne über eine Kühlmittelablassleitung 13 verlassen kann. Üblicherweise wird Wasser als Kühlmittel verwendet. In der Kühlmittelzufuhrleitung 12 ist ein Kühlmittelventil 14 angeordnet. In der Kühlmittelablassleitung 13 ist ein Kühlmittelablassventil 15 angeordnet.
Dem Kühlmittel kann über den Wärmetauscher 16 Wärme entzogen werden, die im Rahmen einer Wärmerückgewinnung an anderer Stelle oder einem anderen Verfahrensschritt des Verarbeitungsverfahrens wieder zugeführt werden kann. Das Niveau des Kühlmittels in der Wanne 11 wird über eine Niveauregelung 17 derart geregelt, dass zumindest ein Teil der Kanäle 9 in das Kühlmittel eintaucht, wenn in der Produktkammer 7 Dampf anfällt, der kondensiert werden muss. In den Kanälen 9 und dem Kühlmittel erfolgt der Wärmeübergang zwischen Dampf und Kühlmittel. Unter Dampf wird hier ein Wasserdampf-Luftgemisch verstanden, welches aus der Produktkammer 7 abgesaugt wird, wenn über die Vakuumleitung 6 ein Vakuum angelegt wird.

Kühlmittel und Dampf stehen miteinander direkt in Kontakt, denn in den Kanälen 9 sind Öffnungen 31 vorgesehen. Der Dampf strömt durch die Öffnungen 31 und in die flüssigkeitsgefüllte Wanne 11. Sobald der Dampf mit dem Kühlmittel Wasser in Berührung kommt, kondensiert der Wasserdampfanteil. Allfällige im Dampf befindliche Verunreinigungen verbleiben im Kühlmittel, welches sich mit Verunreinigungen anreichert. Das Kühlmittel dient daher als Filterstrecke für den Dampf. Die dampfarme Luft tritt in die Abscheidekammer 28 ein. In den Kanälen 9 oder auf dem weiteren Weg durch das Kühlmittel kondensiert der Dampf zu einem Kondensat. Das Kondensat wird über einen in Fig. 2 dargestellten Sammelkanal gesammelt und über eine Kondensatableitung 13 aus dem System entfernt.

Die dampfarme Luft wird über ein in der Abscheidekammer 28 befindliches Abscheideelement 29 geleitet. Es ist zu erwarten, dass sich durch die Blasen, welche sich in der Wanne 11 in Richtung Abscheidekammer 28 bewegen, eine Spritzschicht an der Flüssigkeitsoberfläche ausbildet. Um zu vermeiden, dass Wasserspritzer in den oberen Bereich der Abscheidekammer 28 und in die Vakuumleitung gelangen, kommt das Abscheideelement 29 zum Einsatz. Dieses Abscheideelement kann ein Tropfenabscheider sein, der beispielsweise in Lochblech oder ein Gewirk oder Gewebe umfasst, an welchem Tropfen hängen bleiben. Mehrere derartige Abscheideelemente können hintereinander und/oder übereinander angeordnet werden. Die dampfarme Luft gelangt in die Vakuumleitung 6 und wird über die Vakuumpumpe 3 abgesaugt.

In dem dargestellten Ausführungsbeispiel gemäss Fig. 2 ist die Vakuumkammer 2 von einer Wand 21, in welcher eine Tür 20 eingebaut ist, einer gegenüberliegenden Wand 22, einer hinteren Wand 25 und einer vorderen Wand 26 seitlich begrenzt. Von der Tür 20 ist in der vorliegenden Darstellung nur eine kleine Ecke sichtbar, um die Sicht auf die in der Produktkammer 7 befindlichen Bauelemente frei zu halten. Die Vakuumkammer hat einen Boden 24 sowie eine in Fig. 2 nicht sichtbare Decke 23. Zwischen der Tür 20 und der Wand 21, der hinteren Wand 25, der vorderen Wand 26, sowie der Decke 23 ist eine Dichtung angeordnet, sodass die Vakuumkammer von der Umgebung gasdicht abgeschlossen ist, wenn die Tür 20 geschlossen ist.

Die Produktkammer 7 hat einen Kammerboden 30. Der Kammerboden 30 liegt auf einem Absatz der Zwischenwand 27 auf. Der Kammerboden 30 ist nur teilweise gezeigt, um das Dampfeinleitungselement 8, 9 des Dampfkondensators 4 zu zeigen. Der Kammerboden 30 überdeckt die gesamte Bodenfläche der Produktkammer 7. Der Kammerboden 30 enthält Ausnehmungen 32, durch welche der in der Produktkammer während der Vakuumkühlung entstehende Dampf in den Dampfkondensator 4 geleitet wird.

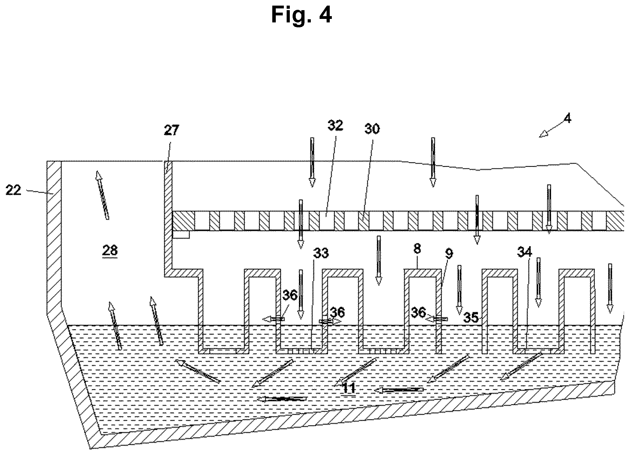

Unterhalb des Kammerbodens 30 ist das Dampfeinleitungselement des Dampfkondensators 4 angeordnet. Das Dampfeinleitungselement besteht aus einer Mehrzahl von Kanälen 9, die in einem Zwischenboden 8 angeordnet sind. Die Kanäle ragen zumindest teilweise in das Kühlmittel. Sie enthalten Öffnungen 31, durch welche Kühlmittel in die Kanäle 9 eintreten kann. Diese Öffnungen sind am Kanalboden angeordnet, können aber auch in einer Seitenwand des Kanals angeordnet sein, was in Fig. 4 gezeigt ist. Die Öffnungen können beispielsweise als kreisförmige Löcher, als Schlitze oder als eine durchgehende Öffnung ausgebildet sein. Das heisst der Boden des Kanals 9 ist völlig offen, wenn die Öffnung als durchgehende Öffnung ausgebildet ist. Alternativ können die Kanäle auch innerhalb von Rohrelementen 39 verlaufen, welche sich unterhalb des Zwischenbodens 8 in das Kühlmittel erstrecken. In Fig. 1 sind zwei Varianten von Rohrelementen dargestellt. Das Rohrelement 39 ist ein Zylinder mit einem Rohrboden, der in einer Ebene angeordnet ist, die im Wesentlichen parallel zum Zwischenboden 8 verläuft. Das Rohrelement 52 weist einen Rohrboden auf, der in einer Ebene angeordnet ist, die in einem Winkel zum Zwischenboden verläuft. Das heisst, das Rohrelement 52 hat einen Rohrboden, der an verschiedenen Stellen seines Umfangs unterschiedlich tief in das Kühlmittel eintaucht. Ähnlich wie das Rohrelement 52 kann auch der Kanal 53 einen Kanalboden 10 aufweisen, der in einer Ebene angeordnet ist, die in einem Winkel zum Zwischenboden 8 verläuft.

Durch die Öffnungen wird der Dampf in die Wanne 11 eingeleitet. Auf diesem Weg kondensiert der Dampf und wird von dem in der Wanne 11 befindlichen Kühlmittel aufgenommen. Die durch diese Kondensation entstehende dampfarme Luft wird in Richtung der Abscheidekammer 28 geführt. Beim Austritt der dampfarmen Luft aus dem Kühlmittel bilden sich Flüssigkeitsspritzer. Um zu vermeiden, dass diese Flüssigkeitsspritzer mit der nach oben strömenden Luft mitgerissen werden, ist ein Abscheideelement 29 in der Abscheidekammer 28 angeordnet. Im Abscheideelement 29 werden Tröpfchen abgeschieden, indem sie beispielsweise in einem Lochblech, Gewirk oder Gewebe hängen bleiben. Die dampfarme Luft durchströmt die Abscheidekammer 28 und wird von der Vakuumleitung 6 aufgenommen, die in dieser Darstellung nicht gezeigt ist.

Die Querschnittsfläche der Gesamtheit der Öffnungen der Kanäle ist grösser als die Querschnittsfläche der Vakuumleitung. Hierdurch wird erreicht, dass die Strömungsgeschwindigkeit in den Kanälen kleiner als in der Vakuumleitung 6 ist.

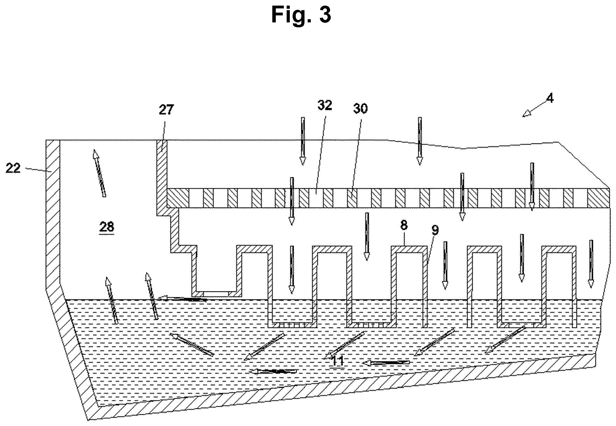

Die Kanäle 9 können unterschiedliche Tiefe aufweisen. Je nach Niveau des Kühlmittels kann ein Teil der Kanäle nicht in das Kühlmittel eintauchen. Fig. 3 zeigt einen Ausschnitt eines Dampfkondensators 4, welcher ein Detail eines Dampfeinleitungselements betrifft, welches einen Zwischenboden 8 mit Kanälen 9 aufweist. Die Kanäle 9 ragen unterschiedlich tief in das Kühlmittel. Insbesondere ist ein Kanal derart ausgebildet, dass er bei dem dargestellten Niveau des Kühlmittels nicht mehr in das Kühlmittel ragt. Da dem Dampf nun weniger Querschnittsfläche zur Verfügung steht, um in die Abscheidekammer 29 zu gelangen, steigt dessen Strömungsgeschwindigkeit.

In Fig. 4 ist eine weitere Variante des Dampfkondensators 4 gezeigt. Die Kanäle 9 des Zwischenbodens 8 enthalten unterschiedliche Arten von Öffnungen. Die Öffnungen 33 sind beispielsweise als kreisförmige Löcher ausgestaltet. Die Öffnungen 34 sind beispielsweise als Langlöcher oder Schlitze ausgestaltet. Alternativ dazu kann der Kanal 35 auch offen sein, das heisst keinen Kanalboden aufweisen. Zusätzlich können in den Seitenwänden der Kanäle 9 seitliche Öffnungen 36 angebracht sein. Auch nach diesem Ausführungsbeispiel ist die Strömungsquerschnittsfläche für den Dampf aus der Produktkammer 7 abhängig vom Niveau des Kühlmittels in der Wanne 11 des Dampfkondensators 4. Insbesondere kann der Strömungsquerschnitt für den Dampf durch die seitlichen Öffnungen 36 vergrössert werden, wenn das Niveau des Kühlmittels so hoch gewählt wird, dass die seitlichen Öffnungen zumindest teilweise überdeckt sind. Der Dampf kann dann durch die seitlichen Öffnungen 36 und die Öffnungen am Kanalboden in das Kühlmittel eintreten. Wenn die Öffnungen frei von Kühlmittel sind, das heisst das Niveau des Kühlmittels unter den seitlichen Öffnungen 36 liegt, dienen diese Öffnungen zum Austausch mit benachbarten Kanalräumen. Da der Dampf von diesen Kanalräumen ungehindert in das Kühlmittel eingetragen werden kann, nimmt die Strömungsquerschnittsfläche für den Dampf zu, das heisst, dessen Strömungsgeschwindigkeit beim Durchtritt durch die Öffnungen der Kanäle sowie der Kanalräume ab. Demnach ist es gemäss diesem Ausführungsbeispiel möglich, das Niveau des Kühlmittels bewusst zu variieren, um die Strömungsgeschwindigkeit des Dampfes und daher auch den Druckverlust zu verändern. Daher kann durch die Regelung des Niveaus des Kühlmittels der Druckverlauf und somit das Abkühlungsverhalten der Lebensmittel beeinflusst werden.

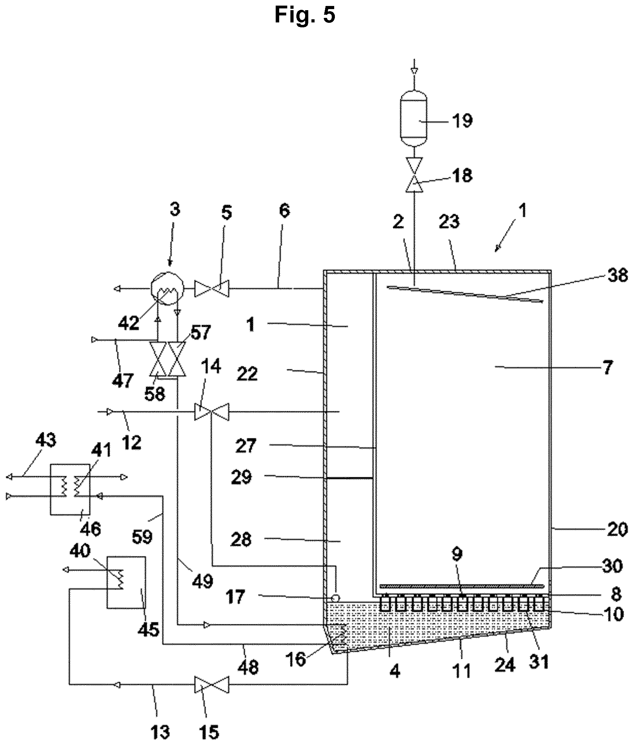

Fig. 5 zeigt eine Variante der Fig. 1 mit Wärmerückgewinnungsanlage. Die Bauelemente, welche die gleiche Funktion wie in Fig. 1 erfüllen, sind gleich bezeichnet. Für deren Beschreibung wird auf Fig. 1 verwiesen. Einerseits kann das bis zu 60° aufgewärmte Kühlmittel über einen Wärmetauscher 40 für die Abwasserkühlung geleitet werden. Der Wärmetauscher 40 kann in einem Behälter 45 angeordnet sein, durch welchen ein Fluid zirkulieren kann. Dieses Fluid kann ein flüssiges oder gasförmiges Wärmeträgerfluid umfassen. Der Behälter 45 kann insbesondere auch als Abwasserkühler eingesetzt werden. Über die Kühlmittelablassleitung 13 wird das verbrauchte Kühlmittel, das mit Verunreinigungen beladen ist, abgelassen und in die Kanalisation eingeleitet. Vor Einleiten in die Kanalisation wird das Kühlmittel abgekühlt, indem es dem Wärmetauscher 40 zugeführt wird. Des Weiteren kann ein Wärmetauscher 41 vorgesehen sein, der zum Vorwärmen eines Prozessfluids 43 verwendet werden kann. Das vorzuwärmende Prozessfluid 43 wird über einen Vorwärmer 46 geführt, welcher die Wärme eines Wärmeaustauschfluids 59 aufnimmt, welches den Wärmetauscher 16 über die Ableitung 48 verlässt. Der Wärmetauscher 16 zur Kühlung des in der Wanne 11 des Dampfkondensators 4 befindlichen Kühlmittels wird von dem Wärmetauschfluid 49 über eine Zuleitung 47 gespeist. Diese Zuleitung 47 kann entweder direkt zum Wärmetauscher 16 führen oder eine Verzweigung enthalten, welche der Vakuumpumpe 3 Wärmeaustauschfluid zuführt. Die Vakuumpumpe 3 kann mittels des Wärmeaustauschfluids 49 gekühlt werden, wenn ihre Betriebstemperatur überschritten wird. Wahlweise kann das Wärmaustauschfluid 49, welches die Vakuumpumpe verlässt, in die Zuleitung 47 eingespeist werden. Absperrmittel 57, 58 können vorgesehen werden, um den Kühlkreislauf der Vakuumpumpe 3 mit dem Kühlkreislauf für den Dampfkondensator 4 zu koppeln oder zu entkoppeln.

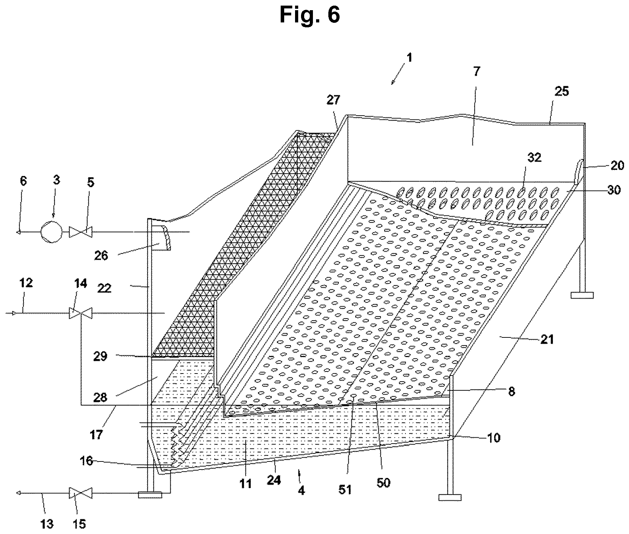

Fig. 6 zeigt eine Variante des Zwischenbodens 50. Der Zwischenboden 50 ist als ein ebenes, in einem Winkel zur Horizontalebene geneigtes Plattenelement ausgebildet. Dieses Plattenelement ist mit Öffnungen 51 ausgestaltet, welche einen Durchtritt des Dampfes von der Produktkammer 7 in die Abscheidekammer 28 erlauben. Der Zwischenboden 50 taucht zumindest teilweise in das im Dampfkondensator befindliche Kühlmittel ein. Insbesondere kann der Strömungsquerschnitt für den Dampf durch die Öffnungen 51 vergrössert werden, wenn das Niveau des Kühlmittels steigt, dass ein grösserer Teil der Öffnungen 51 zumindest teilweise überdeckt sind. Der Dampf kann dann durch die oberhalb des Niveaus des Kühlmittels gelegene Öffnungen des Zwischenbodens 50 in das Kühlmittel eintreten. Wenn die Öffnungen frei von Kühlmittel sind, das heisst das Niveau des Kühlmittels unter den Öffnungen 51 liegt, dienen diese Öffnungen zum Austausch dem an der Unterseite des Zwischenbodens befindlichen Dampfraum. Da der Dampf von diesem Dampfraum ungehindert in das Kühlmittel eingetragen werden kann, nimmt die Strömungsquerschnittsfläche für den Dampf zu, das heisst, dessen Strömungsgeschwindigkeit nimmt beim Durchtritt durch die Öffnungen des Zwischenbodens 50 sowie den Dampfraum ab. Demnach ist es gemäss diesem Ausführungsbeispiel möglich, das Niveau des Kühlmittels bewusst zu variieren, um die Strömungsgeschwindigkeit des Dampfes und daher auch den Druckverlust zu verändern. Daher kann durch die Regelung des Niveaus des Kühlmittels der Druckverlauf und somit das Abkühlungsverhalten der Lebensmittel beeinflusst werden.

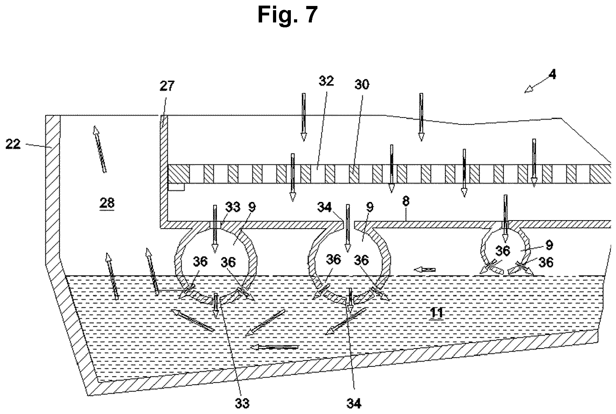

In Fig. 7 ist eine weitere Variante des Dampfkondensators 4 gezeigt. Die Kanäle 9 des Zwischenbodens 8 sind als Rohrelemente ausgeführt. Diese Rohrelemente können unterschiedliche Arten von Öffnungen enthalten. Die Öffnungen 33 sind beispielsweise als kreisförmige Löcher ausgestaltet. Die Öffnungen 34 sind beispielsweise als Langlöcher oder Schlitze ausgestaltet. Alternativ dazu kann der Kanal auch offen sein, das heisst keinen Kanalboden aufweisen, was zeichnerisch nicht dargestellt ist. Zusätzlich können in den Seitenwänden der Kanäle 9 seitliche Öffnungen 36 angebracht sein. Auch nach diesem Ausführungsbeispiel ist die Strömungsquerschnittsfläche für den Dampf aus der Produktkammer 7 abhängig vom Niveau des Kühlmittels in der Wanne 11 des Dampfkondensators 4. Insbesondere kann der Strömungsquerschnitt für den Dampf durch die seitlichen Öffnungen 36 vergrössert werden, wenn das Niveau des Kühlmittels so hoch gewählt wird, dass die seitlichen Öffnungen zumindest teilweise überdeckt sind. Der Dampf kann dann durch die seitlichen Öffnungen 36 und die Öffnungen am Kanalboden in das Kühlmittel eintreten. Wenn die Öffnungen frei von Kühlmittel sind, das heisst das Niveau des Kühlmittels unter den seitlichen Öffnungen 36 liegt, dienen diese Öffnungen zum Austausch mit benachbarten Kanalräumen. Da der Dampf von diesen Kanalräumen ungehindert in das Kühlmittel eingetragen werden kann, nimmt die Strömungsquerschnittsfläche für den Dampf zu, das heisst, dessen Strömungsgeschwindigkeit beim Durchtritt durch die Öffnungen der Kanäle sowie der Kanalräume ab. Demnach ist es gemäss diesem Ausführungsbeispiel möglich, das Niveau des Kühlmittels bewusst zu variieren, um die Strömungsgeschwindigkeit des Dampfes und daher auch den Druckverlust zu verändern. Daher kann durch die Regelung des Niveaus des Kühlmittels der Druckverlauf und somit das Abkühlungsverhalten der Lebensmittel beeinflusst werden.

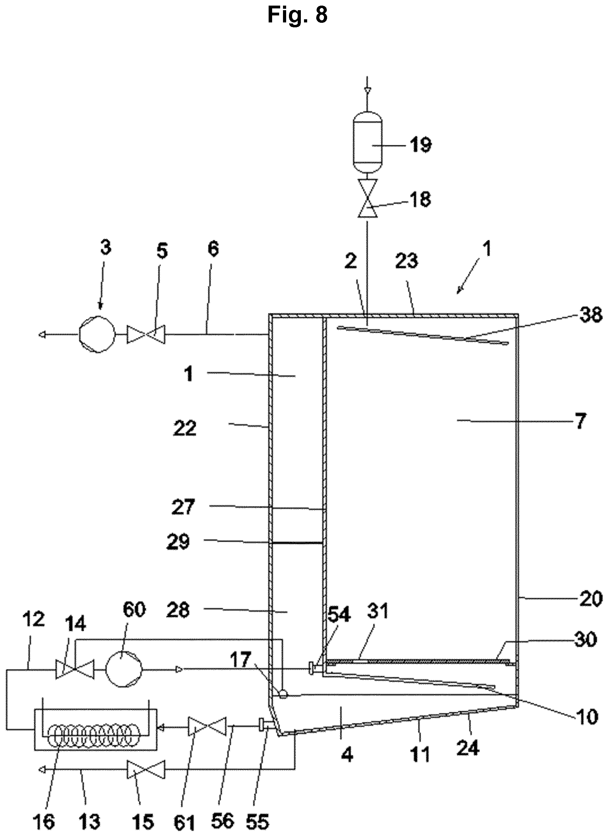

Die in Fig. 8 dargestellte Vakuumkühlvorrichtung 1 umfasst eine Vakuumkammer 2, eine Vakuumquelle 3 und einen Dampfkondensator 4. Die Vakuumquelle 3 ist eine Vakuumpumpe, die über eine Vakuumleitung 6 mit der Vakuumkammer 2 in fluidleitender Verbindung steht. In der Vakuumleitung 6 ist ein Ventil 5 angeordnet. Die Vakuumkammer 2 enthält eine Produktkammer 7, die im Betriebszustand die zu kühlenden Lebensmittel enthält. Des Weiteren enthält die Vakuumkühlvorrichtung 1 eine Abscheidekammer 28. Die Abscheidekammer 28 ist neben der Produktkammer 7 angeordnet und von dieser durch eine Zwischenwand 27 von der Produktkammer getrennt.

Die Vakuumkammer hat im Bereich der Wand 21 oder der Wand 25 oder der Wand 26 eine nicht dargestellte Tür, welche geöffnet wird, um die Lebensmittel in der Produktkammer 7 zu platzieren und nach Abschluss der Vakuumkühlung wieder aus der Produktkammer 7 zu entnehmen. Die Produktkammer 7 kann mittels eines Belüftungsventils 18, welches oberhalb der Decke 23 angeordnet ist, belüftet werden. Das Belüftungsventil ist über eine Belüftungsleitung mit der Produktkammer 7 verbunden. In der Belüftungsleitung ist ein Filterelement 19 angeordnet, um Verunreinigungen aus der Frischluft herauszufiltern, welche die Qualität der Lebensmittel beeinträchtigen können. Das Belüftungsventil kann als variables Drosselelement ausgestaltet sein. Es kann während des Kühlvorgangs zumindest teilweise geöffnet sein. Während des Beladens und Entladens der Lebensmittel ist das Belüftungsventil in geöffnetem Zustand, damit für Personen, welche sich in der Produktkammer befinden, eine ausreichende Frischluftversorgung gewährleistet ist, selbst wenn die Tür der Vakuumkammer 2 geschlossen ist. Da zusammen mit der Frischluft Feuchtigkeit in die Produktkammer gelangt, wird die Frischluft innerhalb der Produktkammer über ein Ablenkelement 38 in Richtung zumindest einer der Wände 21, 25, 26, 27 abgelenkt. Die Wand 26 ist in Fig. 8 nicht sichtbar, da sie vor der Zeichnungsebene liegt und die Wand 25 bildet die hintere Begrenzung der Produktkammer 7 aus. Die beiden Wände 25, 26 sind in der Fig. 2 gezeigt. Während des Kühlvorgangs kondensieren Tröpfchen auf der Oberfläche des Ablenkelements 38 oder an einer der Wände 21, 25, 26, 27. Das Ablenkelement kann mit Ablaufrinnen ausgestattet sein oder es endet an seinem tiefsten Punkt an einer Stelle, von welcher das Kondensat direkt auf den Kammerboden tropfen kann. Mit diesen Massnahmen kann vermieden werden, dass das Kondensat in Kontakt mit den Lebensmitteln kommt.

Die Vakuumkammer 2 enthält den Dampfkondensator 4, der den Boden der Produktkammer 7 ausbildet. Der Dampfkondensator 4 ist von der Produktkammer 7 durch den Kammerboden 30 getrennt. Somit entfällt der in Fig. 1 dargestellte Zwischenboden. Auf dem Kammerboden 30 werden die Lebensmittel in ihren Gestellen abgestellt. Der Kammerboden 30 dient demnach als Auflage für einen Stikkenwagen, welcher die Gestelle trägt, welche die Auflageflächen für die Lebensmittel ausbilden. Unterhalb des Kammerbodens 30 ist ein Kanalboden 10 vorgesehen, der als eine mit Flüssigkeit gefüllte Wanne 11 ausgebildet ist. Die Flüssigkeit ist ein Kühlmittel, welches über die Kühlmittelzufuhrleitung 12 in die Wanne 11 gelangt und die Wanne über eine Kühlmittelablassleitung 13 zumindest teilweise verlassen kann. Üblicherweise wird Wasser als Kühlmittel verwendet. In der Kühlmittelzufuhrleitung 12 kann ein Kühlmittelventil 14 angeordnet sein, dieses Kühlmittelventil ist aber nicht zwingend vorgesehen. Gemäss dem vorliegenden Ausführungsbeispiel wird das Kühlmittel in einem Kühlmittelkreislauf geführt. Der Kühlmittelkreislauf enthält einen Wärmetauscher, der in der Wanne 11 oder ausserhalb der Wanne 11 beispielsweise in der Abscheidekammer 28 oder sogar ausserhalb der Vakuumkühlvorrichtung 1 angeordnet sein kann.
Dem Kühlmittel wird mittels des Wärmetauschers 16 Wärme entzogen. Diese Wärme kann im Rahmen einer Wärmerückgewinnung an anderer Stelle des Verarbeitungsverfahrens wieder zugeführt werden. Der Wärmetauscher 16 kann beispielsweise als Plattenwärmetauscher ausgeführt sein. Es können auch eine Mehrzahl von Wärmetauschern vorgesehen sein, die in der Wanne 11, der Abscheidekammer 28 oder ausserhalb der Vakuumkühlvorrichtung 1 angeordnet sein können.

Zwischen dem Kammerboden 30 und dem Boden des Kondensators 24 ist ein als eine Rampe ausgebildeter Kanalboden 10 angeordnet. Der Kammerboden 30 enthält mindestens eine Öffnung 31, durch welche der Dampf in Innenraum des Dampfkondensators 4 eintreten kann.

In der Kühlmittelablassleitung 13 ist ein Kühlmittelablassventil 15 angeordnet. Das Niveau des Kühlmittels in der Wanne 11 wird über eine Niveauregelung 17 derart geregelt, dass ein Abstand zwischen der Rampe und der Flüssigkeitsoberfläche bestehen bleibt, wenn in der Produktkammer 7 Dampf anfällt, der kondensiert werden muss. Über den Kanalboden erfolgt eine Flüssigkeitsströmung. Diese Flüssigkeitsströmung wird durch Kühlmittel erzeugt, welches über einen Kühlmitteleintrittsstutzen in den Innenraum des Dampfkondensators 4 gelangt. Der Kanalboden dient als Stoffaustauschfläche. Der Dampf wird in den Kühlmittelstrom eingetragen und somit der Luft entzogen. Gleichzeitig erfolgt der Wärmeübergang zwischen Dampf und Kühlmittel. Unter Dampf wird hier ein Wasserdampf-Luftgemisch verstanden, welches aus der Produktkammer 7 abgesaugt wird, wenn über die Vakuumleitung 6 ein Vakuum angelegt wird.

Kühlmittel und Dampf stehen miteinander direkt in Kontakt, denn von der oder den Öffnungen 31 wird der Dampf auf die Oberfläche des Kühlmittelstroms übertragen. Der Dampf strömt durch die Öffnung oder die Öffnungen 31 und in die flüssigkeitsgefüllte Wanne 11. Sobald der Dampf mit dem Kühlmittel Wasser in Berührung kommt, kondensiert der Wasserdampfanteil. Allfällige im Dampf befindliche Verunreinigungen verbleiben im Kühlmittel, welches sich mit Verunreinigungen anreichert. Das Kühlmittel dient daher als Filterstrecke für den Dampf. Die dampfarme Luft tritt in die Abscheidekammer 28 ein.

Insbesondere tritt das Kühlmittel über den Kühlmitteleinlassstutzen 54 unterhalb des Kammerbodens 30 in den Dampfkondensator 4 ein. Das Kühlmittel fliesst entlang dem als Rampe ausgebildeten Kanalboden 10, der als Dampfeinleitungselement dient. Der durch die Öffnung 31 eintretende Dampf strömt parallel zu dem Kühlmittel entlang der dem Kanalboden 10. Auf diesem Weg ist der Dampf in direktem Kontakt mit dem Kühlmittel. Entlang dieses Weges erfolgt ein Stoffaustausch über die Oberfläche des Kühlmittelstroms, indem Dampf vom Kühlmittelstrom aufgenommen wird. Der Kühlmittelstrom fliesst wasserfallartig vom unteren Ende des Kanalbodens 10 in die Wanne 11. Hierbei entsteht eine Spritzschicht, die den Stoffaustausch weiter begünstigt. Das heisst, dass ein grosser Teil des Stoffaustauschs kann bereits erfolgt sein, wenn das umgewälzte Kühlmittel vom unteren Ende des Kanalbodens in das in der Wanne 11 befindliche Kühlmittel eintritt, welches sich am Boden der Vakuumkammer ansammelt.

Entlang dem Kanalboden 10 oder auf dem weiteren Weg in Richtung der Oberfläche des Kühlmittels, kondensiert der Dampf zu einem Kondensat. Alternativ kann in einem nicht gezeigten Ausführungsbeispiel das Ende des Kanalbodens in das Kühlmittel eintauchen. Das Kühlmittel wird über den Kühlmittelablassstutzen 55 in die einen Kühlmittelablauf 56 geführt, welcher zu dem Wärmetauscher 16 geführt wird. Das Kühlmittel durchströmt den Wärmetauscher und wird abgekühlt. Vom Wärmetauscher gelangt das Kühlmittel über die Kühlmittelzufuhrleitung 12 zu einer Umwälzpumpe 60, welche das Kühlmittel zu dem Kühlmitteleinlassstutzen 54 fördert. Der Kühlmittelkreislauf kann mindestens eine Absperrvorrichtung 61 enthalten, um den Betrieb zu des Kühlmittelkreislaufs zu unterbrechen. Die Absperrvorrichtung 61 kann auch ein Drosselventil umfassen, um den Durchfluss durch den Kühlmittelablauf zu regeln. Alternativ oder in Ergänzung kann auch ein Kühlmittelventil 14 vorgesehen sein, welches den Kühlmittelstrom durch den Wärmetauscher verringern kann oder mittels welchem die Strömung durch den Wärmetauscher verlangsamt werden kann, um die Verweilzeit im Wärmetauscher zu erhöhen oder der Durchfluss erhöht werden kann, um die Verweilzeit im Wärmetauscher zu verringern. Mittels des Kühlmittelventils 14 und/oder der Absperrvorrichtung kann aufgrund einer Temperaturmessung des Kühlmittels oder einer Niveaumessung des Kühlmittels der Durchfluss des Kühlmittels durch den Wärmetauscher sowie das umgewälzte Kühlmittelvolumen geregelt werden.

Überschüssiges Kondensat wird über eine Kondensatableitung 13 aus dem System entfernt. Diese Kondensatableitung dient auch dazu, periodisch die sich im Kühlmittel ansammelnden Verunreinigungen aus dem System zu entfernen.

Die dampfarme Luft wird über ein in der Abscheidekammer 28 befindliches Abscheideelement 29 geleitet. Der Dampfstrom, welcher sich in der Wanne 11 in Richtung Abscheidekammer 28 bewegt kann eine Spritzschicht an der Flüssigkeitsoberfläche ausbilden. Um zu vermeiden, dass Wasserspritzer in den oberen Bereich der Abscheidekammer 28 und in die Vakuumleitung gelangen, kommt das Abscheideelement 29 zum Einsatz. Dieses Abscheideelement kann ein Tropfenabscheider sein, der beispielsweise in Lochblech oder ein Gewirk oder Gewebe umfasst, an welchem Tropfen hängen bleiben. Mehrere derartige Abscheideelemente können hintereinander und/oder übereinander angeordnet werden. Die dampfarme Luft gelangt in die Vakuumleitung 6 und wird über die Vakuumpumpe 3 abgesaugt.

Anstelle oder in Ergänzung zu dem Abscheideelement kann ein Wärmetauscher in der Abscheidekammer vorgesehen sein. Dieser Wärmetauscher kann in den Kühlmittelkreislauf eingebunden sein. Insbesondere kann der Wärmetauscher eingesetzt werden, um durch Erwärmung des in die Vakuumpumpe 3 eintretenden dampfarmen Luftstroms eine Kühlung oder gegebenenfalls eine weitere Kühlung des Kühlmittels zu bewirken.

Des Weiteren kann alternativ zu den vorhergehenden Ausführungsbeispielen oder in Ergänzung hierzu eine Kühlschlange in der Wanne vorgesehen sein, welche berippte Rohrelemente umfasst. Diese berippten Rohrelemente werden vorteilhafterweise durch einen Zwischenboden oder durch einen fest installierten Kammerboden 30, der nur zu Montagezwecken oder für Instandhaltungsarbeiten entfernt werden kann, vor Beschädigung geschützt. Wenn die berippten Rohrelemente frei zugänglich sind, besteht die Gefahr, dass diese Rohrelemente beispielsweise bei einer Reinigung vom Reinigungspersonal betreten werden. Einer derartigen Belastung halten die berippten Rohrelemente üblicherweise nicht stand, insbesondere wenn die Rippen als dünnwandige Blechteile ausgebildet sind.

## Patentansprüche

1. Eine Vakuumkühlvorrichtung zur Kühlung von Lebensmitteln, insbesondere heissen Backwaren, umfasst eine Vakuumkammer (2), die eine Produktkammer (7) zur Aufnahme des Lebensmittels für dessen Kühlung und eine Abscheidekammer (28), eine Vakuumquelle (3), wie beispielsweise eine Vakuumpumpe, die mit der Abscheidekammer (28) verbunden ist und einen Dampfkondensator (4) zur Kondensation von in der Produktkammer (7) während des Abkühlvorgangs entstehendem Dampf enthält, wobei der Dampfkondensator (4) unterhalb der Produktammer (7) angeordnet ist,
wobei der Dampfkondensator (4) ein Kühlmittel in einer Wanne (11) enthält, sowie ein Dampfeinleitungselement (8, 9, 10) zur Einleitung des Dampfes von der Produktkammer (7) in das Kühlmittel umfasst, wobei die Abscheidekammer (28) von der Produktkammer (7) durch eine Zwischenwand (27) baulich getrennt ist, wobei die Abscheidekammer (28) in Bezug auf die Fliessrichtung des Dampfes stromaufwärts der Vakuumquelle (3) angeordnet ist und das Dampfeinleitungselement (8, 9, 10) des Dampfkondensators (4) stromaufwärts der Abscheidekammer (28) angeordnet ist, **dadurch gekennzeichnet, dass** die Abscheidekammer (28) oberhalb des Dampfkondensators (4) angeordnet ist.

2. Vakuumkühlvorrichtung nach Anspruch 1, wobei das Dampfeinleitungselement (8, 9, 10) unterhalb eines Kammerbodens (30) angeordnet ist.

3. Vakuumkühlvorrichtung nach Anspruch 1 oder 2, wobei das Dampfeinleitungselement (8, 9, 10) eine Mehrzahl von Kanälen oder Rohrelementen (39) oder ein Plattenelement (50) umfasst, welche teilweise in das Kühlmittel hineinragen, wobei der Dampfkondensator (4) als Bestandteil der Vakuumkammer (2) ausgebildet sein kann, wobei der Dampfkondensator insbesondere als eine Filterstrecke für das Rückhalten von Verunreinigungen im Dampf ausgebildet ist.

4. Vakuumkühlvorrichtung nach einem der vorhergehenden Ansprüche, wobei eine Regelungseinheit (17) für die Kondenswassermenge und/oder die Kondenswassertemperatur vorgesehen ist.

5. Vakuumkühlvorrichtung nach einem der vorhergehenden Ansprüche, wobei in der Abscheidekammer ein Abscheideelement angeordnet ist.

6. Vakuumkühlvorrichtung nach einem der vorhergehenden Ansprüche, wobei die Vakuumquelle eine Vakuumpumpe umfasst, wobei die Vakuumpumpe insbesondere eine drehzahlgeregelte Vakuumpumpe ist.

7. Vakuumkühlvorrichtung nach einem der vorhergehenden Ansprüche, wobei die Wanne (11) einen Wärmetauscher (16) enthält, oder ein Wärmetauscher ausserhalb der Wanne (11) angeordnet ist, wobei das Kühlmittel mittels des Wärmetauschers kühlbar ist, wobei das Kühlmittel in einem geschlossenen Kreislauf durch den Wärmetauscher geführt werden kann.

8. Verfahren zur Vakuumkühlung eines Lebensmittels umfassend die Schritte: Befüllen einer Produktkammer (7) einer Vakuumkühlvorrichtung (1) mit dem Lebensmittel, Schliessen der Produktkammer, Betätigen einer Vakuumquelle zur Erzeugung eines negativen Drucks, Entnahme des gekühlten Lebensmittels, wobei der in der Produktkammer (7) durch das Abkühlen des Lebensmittels entweichende Dampf in einem Dampfkondensator (4) kondensiert wird, wobei der Dampfkondensator in der Produktkammer angeordnet ist, wobei die Vakuumquelle (3) mit der Abscheidekammer (28) verbunden ist, wobei die Abscheidekammer (28) von der Produktkammer durch eine Zwischenwand (27) baulich getrennt ist, wobei die Abscheidekammer (28) in Bezug auf die Fliessrichtung des Dampfes stromaufwärts der Vakuumquelle (3) angeordnet ist und das Dampfeinleitungselement (8, 9, 10) des Dampfkondensators (4) stromaufwärts der Abscheidekammer (28) angeordnet ist, sodass der Dampf von der Produktkammer (7) durch das Dampfeinleitungselement (8, 9, 10) in die Abscheidekammer (28) zur Vakuumquelle (3) strömt, **dadurch gekennzeichnet, dass** die Abscheidekammer (28) oberhalb des Dampfkondensators (4) angeordnet ist.

9. Verfahren zur Vakuumkühlung eines Lebensmittels nach Anspruch 8, wobei der Dampfkondensator ein Kühlmittel in einer Wanne (11) enthält, sodass der Dampf in ein Dampfeinleitungselement (8, 9, 10) geführt wird und in das Kühlmittel eingeleitet wird.

10. Verfahren zur Vakuumkühlung eines Lebensmittels nach Anspruch 8 oder 9, wobei das Kühlmittel mit Dampf beladen wird und der Dampf einen Wasseranteil enthält, welcher im Kühlmittel kondensiert, wobei das Kühlmittel insbesondere Wasser ist, wobei insbesondere zumindest 60%, bevorzugt zumindest 90% des Wasseranteils im Dampf im Dampfkondensator (4) kondensieren.

11. Verfahren zur Vakuumkühlung eines Lebensmittels nach einem der Ansprüche 8 bis 10, wobei das Kühlmittel, welches periodisch oder weil ein vorgegebener Grenzwert erreicht wird, ausgetauscht wird, insbesondere wenn dessen Temperatur zu hoch wird, die Konzentration an Verunreinigungen einen Maximalwert erreicht oder der pH- Wert auf 4 oder weniger gesunken ist.

12. Verfahren zur Vakuumkühlung eines nach einem der Ansprüche 8 bis 11, wobei die Kühlung des Kühlmittels mittels eines Wärmetauschers (16) erfolgt, der beispielsweise mit Frischwasser gespeist wird.

13. Verfahren zur Vakuumkühlung eines Lebensmittels nach einem der Ansprüche 8 bis 12, wobei im Dampf befindliche Verunreinigungen im Kondensat angereichert werden und mit dem Kondensat ausgetragen werden.

## Claims

1. A vacuum cooling device for the cooling of foodstuff, in particular hot bakery products comprises a vacuum chamber (2) containing a product chamber (7) for receiving the foodstuff for its cooling and a separation chamber (28), a vacuum source (3), such as a vacuum pump which is connected to the separation chamber (28) and a vapor condenser (4) for condensation of vapor generated during the cooling process in the product chamber (7), wherein the vapor condenser (4) is arranged below the product chamber (7), wherein the vapor condenser comprises a cooling medium in a sump (11) and comprises a vapor introduction element (8, 9, 10) for introducing the vapor from the product chamber (7) into the cooling medium, wherein the separation chamber (28) is structurally separated from the product chamber (7) by an intermediate wall (27), wherein the separation chamber (28) is arranged upstream of the vacuum source (3) with respect to the direction of flow of the vapor and the vapor introduction element (8, 9, 10) of the vapor condenser (4) is arranged upstream of the separation chamber (28), **characterized in that** the separation chamber (28) is arranged above the vapor condenser (4).

2. The vacuum cooling device of claim 1, wherein the vapor introduction element (8, 9, 10) is arranged below the chamber floor (30).

3. The vacuum cooling device of one of claims 1 or 2, wherein the vapor introduction element (8, 9) comprises a plurality of channels or tube elements (39) or a plate element (50) which extend partially into the cooling medium, wherein the vapor condenser (4) is configured as a portion of the vacuum chamber (2), wherein the vapor condenser is in particular configured as a filter path for retaining contaminants from the vapor.

4. The vacuum cooling device of one of the preceding claims, wherein a control unit (17) is provided for the amount of condensed water and/or the condensed water temperature.

5. The vacuum cooling device of one of the preceding claims, wherein a separation element is arranged in the separation chamber.

6. The vacuum cooling device of one of the preceding claims, wherein the vacuum source comprises a vacuum pump, wherein the vacuum pump is in particular a vacuum pump of controlled rotary speed.

7. The vacuum cooling device of one of the preceding claims, wherein the sump (11) contains a heat exchanger (16) or a heat exchanger is arranged externally of the sump (11), wherein the cooling medium can be cooled by the heat exchanger, wherein the cooling medium can be cycled in a closed cycle through the heat exchanger.

8. A method for the vacuum cooling of a foodstuff comprises the steps: filling a product chamber (7) of a vacuum cooling device (1) with a foodstuff, closing the product chamber, operating a vacuum source (3) for generating a negative pressure, extraction of the cooled foodstuff, wherein the vapor leaving the foodstuff by cooling the foodstuff in the product chamber (7) is condensed in a vapor condenser (4), wherein the vapor condenser is arranged in the product chamber, wherein the vacuum source (3) is connected to a separation chamber (28), wherein the separation chamber (28) is structurally separated from the product chamber (7) by an intermediate wall (27), wherein the separation chamber (28) is arranged upstream of the vacuum source (3) with respect to the direction of flow of the vapor and a vapor introduction element (8, 9, 10) of the vapor condenser (4) is arranged upstream of the separation chamber (28), such that the vapor flows from the product chamber (7) through the vapor introduction element (8, 9, 10) into the separation chamber (28) to the vacuum source (3), **characterized in that** the separation chamber (28) is arranged above the vapor condenser (4).

9. The method for the vacuum cooling of a foodstuff of claim 8, wherein the vapor condenser contains a cooling medium in a sump (11), such that the vapor is guided into the vacuum introduction element (8, 9, 10) and introduced into the cooling medium.

10. The method for vacuum cooling of a foodstuff of one of claims 8 or 9, wherein the cooling medium is charged with vapor and the vapor contains a water portion, which condenses in the cooling medium, wherein the cooling medium is in particular water, wherein at least 60%, particularly preferable at least 90% of the water portion of the vapor condense in the vapor condenser (4).

11. The method for vacuum cooling of a foodstuff of one of claims 8 to 10, wherein the cooling medium is exchanged periodically or when a predetermined limiting value is reached, in particular if its temperature is too high, the concentration of the contaminants reaches a maximum value or the pH value has fallen to 4 or less.

12. The method for vacuum cooling of a foodstuff of one of claims 8 to 11, wherein the cooling medium is cooled by a heat exchanger (16) which is fed for instance with fresh water.

13. The method for vacuum cooling of a foodstuff of one of claims 8 to 12, wherein contaminants in the vapor are enriched in the condensate and are carried away with the condensate.

## Revendications

1. Un dispositif de refroidissement sous vide pour refroidir des aliments, en particulier des pâtisseries chaudes, comprenant une chambre à vide (2), une chambre de produit (7) pour recevoir les aliments pour les refroidir, une chambre de séparation (28), une source de vide (3), telle qu'une pompe à vide, qui est connecté à la chambre de séparation (28) et un condenseur de vapeur (4) pour condenser la vapeur générée dans la chambre de produit (7) pendant le processus de refroidissement, en ce que le condenseur de vapeur (4) est disposé sous la chambre de produit (7), en ce que le condenseur de vapeur (4) contient un réfrigérant dans un bac (11) et comprend un élément d'introduction de vapeur (8, 9, 10) pour introduire la vapeur de la chambre de produit (7) dans le réfrigérant, en ce que la chambre de séparation (28) est structurellement séparé de la chambre de produit (7) par une paroi intermédiaire (27), la chambre de séparation (28) étant disposée en amont de la source de vide (3) par rapport au sens d'écoulement de la vapeur, et en ce que l'élément d'introduction de vapeur (8, 9, 10) du condenseur de vapeur (4) est disposé en amont de la chambre de séparation (28), **caractérisé en ce que** la chambre de séparation (28) est disposée au-dessus du condenseur de vapeur (4).

2. Le dispositif de refroidissement sous vide selon la revendication 1, dans lequel l'élément d'introduction de vapeur (8, 9, 10) est disposé sous un fond de chambre (30).

3. Le dispositif de refroidissement sous vide selon la revendication 1 ou 2, dans lequel l'élément d'introduction de vapeur (8, 9, 10) comprend une pluralité de canaux ou d'éléments de tuyau (39) ou un élément de plaque (50) qui font partiellement saillie dans le réfrigérant, en ce que le condenseur de vapeur (4) peut être formée comme une partie de la chambre à vide (2), dans laquelle le condenseur de vapeur est conçu en particulier comme une section de filtre pour la rétention des impuretés dans la vapeur.

4. Le dispositif de refroidissement sous vide selon l'une des revendications précédentes, dans lequel une unité de contrôle (17) est prévue pour contrôler la quantité de l'eau condensée et / ou de la température de l'eau condensée.

5. Le dispositif de refroidissement sous vide selon l'une des revendications précédentes, dans lequel un élément de séparation est disposé dans la chambre de séparation.

6. Le dispositif de refroidissement sous vide selon l'une des revendications précédentes, dans lequel la source de vide comprend une pompe à vide, la pompe à vide étant notamment une pompe à vide de vitesse contrôlée.

7. Dispositif de refroidissement sous vide selon l'une des revendications précédentes, dans lequel le bac (11) contient un échangeur de chaleur (16) ou un échangeur de chaleur est disposé à l'extérieur du bac (11), en ce que le réfrigérant peut être refroidi au moyen de l'échangeur de chaleur, en ce que le réfrigérant peut être passé à travers l'échangeur de chaleur en circuit fermé.

8. Procédé de refroidissement sous vide d'un aliment comprenant les étapes: remplir une chambre de produit (7) d'un dispositif de refroidissement sous vide (1) avec un aliment, fermer la chambre de produit, actionner une source de vide pour générer une pression négative, retirer l'aliment refroidi, en ce que la vapeur générée par le refroidissement des aliments est condensée dans un condenseur de vapeur (4) dans la chambre de produit (7), en ce que le condenseur de vapeur est disposé dans la chambre de produit, en ce que la source de vide (3) est reliée à la chambre de séparation (28), en ce que la chambre de séparation (28) est structurellement séparée de la chambre de produit par une paroi intermédiaire (27), en ce que la chambre de séparation (28) est disposée en amont de la source de vide (3) par rapport à la direction d'écoulement de la vapeur et un élément d'introduction de vapeur (8, 9, 10) du condenseur de vapeur (4) est disposé en amont de la chambre de séparation (28) de telle sorte que la vapeur provenant de la chambre de produit (7) s'écoule à travers de l'élément d'introduction de vapeur (8, 9,10) dans la chambre de séparation (28) vers la source de vide (3), **caractérisé en ce que** la chambre de séparation (28) est disposée au-dessus du condenseur de vapeur (4).

9. Le procédé de refroidissement sous vide d'un aliment selon la revendication 8, dans lequel le condenseur de vapeur contient un réfrigérant dans un bac (11), de sorte que la vapeur est guidée dans l'élément d'introduction de vapeur (8, 9, 10) et est introduite dans le réfrigérant.

10. Le procédé de refroidissement sous vide d'un aliment selon la revendication 8 ou 9, dans lequel le réfrigérant est chargé de vapeur et la vapeur contient une proportion d'eau qui condense dans le réfrigérant, en ce que le réfrigérant est notamment de l'eau, en ce qu'en particulier au moins 60%, de préférence au moins 90% de l'eau condense dans la vapeur du condenseur de vapeur (4).

11. Le procédé de refroidissement sous vide d'un aliment selon l'une des revendications 8 à 10, dans lequel le réfrigérant est remplacé périodiquement ou parce qu'une valeur limite prédéterminée est atteinte, notamment lorsque sa température devient trop élevée, la concentration des impuretés atteint une valeur maximale ou le pH est tombée à 4 ou moins.

12. Le procédé de refroidissement sous vide d'un aliment selon l'une des revendications 8 à 11, dans lequel le refroidissement du réfrigérant est atteint au moyen d'un échangeur de chaleur (16) alimenté, par exemple, en eau douce.

13. Le procédé de refroidissement sous vide d'un aliment selon l'une des revendications 8 à 12, dans lequel les impuretés dans la vapeur sont enrichies dans le condensat et sont évacuées avec le condensat.
